# EUROPEAN PATENT SPECIFICATION

(11) **EP 0 983 842 B1**
(45) Date of publication and mention of the grant of the patent: **20.07.2005**
(21) Application number: 99116764.4
(22) Date of filing: 30.08.1999
(51) Int. Cl.: B32B 7/00, B32B 27/20

(54) **Conductive sheet, process for producing the same, and molded article**
Leitfähige Platte, Verfahren zur Herstellung, und Formteil
Feuille conductive, méthode pour la production et article moulé

(30) Priority: 31.08.1998 JP 24499698
(43) Date of publication of application: 08.03.2000
(73) Proprietor: DAINIPPON INK AND CHEMICALS, INC., Itabashi-ku Tokyo (JP)
(72) Inventor: Ueno, Youichi, Chiba-shi, Chiba-ken (JP); Yamamoto, Hideaki, Chiba-shi, Chiba-ken (JP)
(74) Representative: Albrecht, Thomas, Dr.

(56) References cited:
- EP-A- 0 232 033
- US-A- 5 284 705

## Description

### BACKGROUND OF THE INVENTION

### 1. FIELD OF THE INVENTION

The present invention relates to a conductive sheet in which a conductive coating is applied to a thermoplastic resin sheet in which a layer in which a conductive filler is mixed is laminated over at least one side of a base sheet, the conductive sheet being excellent in prevention of release of carbon and in conductivity maintaining property and being suitable for packaging of electronic parts such as carrier tapes and trays. The present invention also relates to a molded article obtained from the conductive sheet.

This application is based on Japanese Patent Application No. Hei 10-244996, the content of which is incorporated herein by reference.

### 2. DESCRIPTION OF RELATED ART

In plastic sheets for packaging of electronic parts which require prevention of static breakdown, conductive fillers such as carbon black and metallic fine powder are used, among which carbon black is often used since carbon black imparts an excellent conductivity to a plastic when mixed in it.

Among conductive sheets in which carbon black is used, there are (1) single-layered sheets composed of a conductive resin compound obtained by mixing carbon black in a thermoplastic resin, or laminated sheets in which a conductive resin compound is used only in the surface layer (mixed-in-type conductive sheets), and (2) coated conductive sheets, in which a conductive coating containing carbon black is applied to a thermoplastic resin sheet. Examples of the mixed-in-type conductive sheets (1) are the single-layered sheet of polycarbonate resin disclosed in Japanese Unexamined Patent Application, First Publication (Kokai) No. Hei 6-166809 and the laminated sheet disclosed in Japanese Unexamined Patent Application, First Publication (Kokai) No. Sho 57-205145, in which a conductive resin compound layer is provided on the surface of a base sheet which is composed of a high impact polystyrene (HIPS) resin or an acrylonitrile-butadiene-styrene copolymer (ABS) resin. On the other hand, an example of the coated conductive sheet (2) is the one disclosed in Japanese Unexamined Patent Application, First Publication (Kokai) No. Sho 61-148702, which is obtained by applying a treating agent containing carbon black, a binder, and a solvent to a base sheet.

However, the mixed-in-type conductive sheets disclosed in Japanese Unexamined Patent Applications, First Publication (Kokai) Nos. Hei 6-166809 and Sho 57-205145 are liable to release carbon due to surface friction to contaminate the parts, although the mixed-in-type conductive sheets exhibites a small increase of surface resistivity when molded into a deep-drawn article since they have a thick conductive layer in comparison with the coated conductive sheet, and are excellent in maintaining the conductivity in stretched portions (i.e., conductivity maintaining property). The problem of contamination of parts has been particularly critical for packaging of electronic parts.

The coated conductive sheet in Japanese Unexamined Patent Application, First Publication (Kokai) No. 61-148702 has the problem that it is poor in conductivity maintaining property since only a thin conductive printing layer applied to the surface provides conduction, and the conductivity is reduced particularly when the coated conductive sheet is molded into a deep-drawn article, although the release of carbon due to surface friction is limited and the problem of contamination of parts is small since carbon in the coated conductive sheet has good dispersibility and good adhesion to resin.

EP-A-0 232 033 relates to an electrically conductive article comprising a transparent plastics molded article, an electrically conductive coat layer comprising 60-80% by weight of an electrically conductive powder mainly composed of tin oxide and 40-20% by weight of a resin component, and a topcoat layer comprising 0-50% by weight of an electrically conductive powder mainly composed of tin oxide and 100-50% by weight of a resin component.

### BRIEF SUMMARY OF THE INVENTION

The object to be achieved by the present invention is to provide a conductive resin sheet which does not release carbon due to friction on the surface of the sheet as is the conventional problem, and which has an excellent conductivity maintaining property and exhibits stable conductivity even at a portion which is stretched in a molding process or the like.

As a result of diligent study in an attempt to develop a conductive sheet which releases an extremely small amount of carbon due to surface friction and which has an excellent conductivity maintaining property, the present inventors have found that the above object can be achieved by laminating a thermoplastic resin layer containing a conductive filler over at least one side of a thermoplastic resin sheet base and further applying a conductive coating, and have completed the present invention.

Accordingly, the present invention provides:
a conductive sheet which is a laminated sheet comprising a thermoplastic resin base layer (A) and a thermoplastic resin layer (B) containing 2 to 20% by weight of a conductive filler, laminated together, the surface of the thermoplastic resin layer (B) being provided with a conductive printed layer (C), comprising a conductive filler and a binder resin,
a process for producing a conductive sheet comprising the steps of preparing a laminated sheet in which a thermoplastic resin base layer (A) and a thermoplastic resin layer (B) containing 2 to 20% by weight of a conductive filler are laminated together and applying a conductive coating (c) to the thermoplastic resin layer (B), and
a molded article obtained by heat-molding the above conductive sheet.

According to the present invention, a conductive resin sheet can be provided for which release of carbon due to surface friction is prevented and which has an excellent conductivity maintaining property and exhibits stable conductivity even at a portion which is stretched in a molding process or the like. Accordingly, the conductive sheet of the present invention is suitable for packaging of electronic parts, such as carrier tapes and trays.

### DETAILED DESCRIPTION OF THE INVENTION

The present invention will be described in detail in the following.

As described above, the conductive sheet according to the present invention is a laminated sheet comprising a thermoplastic resin base layer (A) and a thermoplastic resin layer (B) containing 2 to 20% by weight of a conductive filler, laminated together, the surface of the thermoplastic resin layer (B) being provided with a printed layer having conductivity (a conductive printed layer (C)).

A thermoplastic resin component (a1) which forms the thermoplastic resin base layer (A) is not particularly limited as long as it can be processed to form a sheet by extrusion in accordance with a conventional method, and one having the necessary properties may be selected. Specific examples are commodity resins, such as a styrene resin, an olefin resin, and a polyester resin, a polycarbonate, a polyphenyleneether (PPE) resin, and a polyphenylenesulfide (PPS) resin. Among these, a styrene resin, which is excellent in workability for forming a sheet by extrusion and in formability (in a method such as vacuum forming, press forming, and air pressure forming), is preferable.

Here, examples of the styrene resin include resins such as a general purpose polystyrene (GPPS) resin, a (meth)acrylic ester-styrene copolymer (MS) resin, a high impact polystyrene (HIPS) resin, a (meth)acrylic ester-butadiene-styrene copolymer (MBS) resin, and an acrylonitrile-butadiene-styrene copolymer (ABS) resin, among which the MBS resin or the ABS resin is particularly preferable in view of rigidity and impact strength. Only one of the styrene resins or two or more mixed together may be used, and a rubber which contains a styrene as a constituent, such as a styrene-butadiene block copolymer or its hydrogenated product, may be added. A conventional resin or rubber and various additives (such as a lubricant, an antioxidant, and an inorganic filler) may be further added to such an extent that the necessary properties do not deteriorate. Alternatively, the styrene resin may be recycled from scrap.

A thermoplastic resin component (b1) which forms the thermoplastic resin layer (B) containing 2 to 20% by weight of a conductive filler is not particularly limited as long as it can be processed to form a film by extrusion in accordance with a conventional method, and can be selected appropriately as necessary. Specific examples are commodity resins, such as a styrene resin, an olefin resin, and a polyester resin, a polycarbonate, a polyphenyleneether (PPE) resin, and a polyphenylenesulfide (PPS) resin. Among these, a styrene resin, which is excellent in workability for forming a sheet by extrusion and in formability (in a method such as vacuum forming, press forming, and air pressure forming), is preferable.

Here, examples of the styrene resin are resins such as a general purpose polystyrene (GPPS) resin, a (meth)acrylic ester-styrene copolymer (MS) resin, a high impact polystyrene (HIPS) resin, a (meth)acrylic ester-butadiene-styrene copolymer (MBS) resin, and an acrylonitrile-butadiene-styrene copolymer (ABS) resin, however, the styrene resin is not limited to them. Among the above examples, the MBS resin or the ABS resin is particularly preferable in view of rigidity and impact strength.

Only one of these styrene resins or two or more mixed together may be used. In the present invention, in view of ease of making a compound containing a conductive filler (b2), it is preferable to use an HIPS resin. Accordingly, in view of workability for forming a sheet by extrusion, rigidity, and impact strength, it is preferable to prepare a compound containing a conductive filler using an HIPS resin, and then mix the compound with an MBS resin or an ABS resin.

It is preferable that the thermoplastic resin component (a1) and the thermoplastic resin component (b1) are the same or of the same kind since good adhesion between the thermoplastic resin base layer (A) and the thermoplastic resin layer (B) can be obtained.
Preferable examples of the combinations of "the same resins" are as follows:
(1) both (a1) and (b1) are an HIPS resin,
(2) both (a1) and (b1) are an MBS resin, and
(3) both (a1) and (b1) are an ABS resin.

(2) and (3) are particularly preferable in view of rigidity and impact strength.

Preferable examples of the combinations of "resins of the same kind" are as follows:
(4) (a1) is an MBS resin, and (b1) is a mixed resin of an HIPS resin and an MBS resin,
(5) (a1) is an ABS resin, and (b1) is a mixed resin of an HIPS resin and an ABS resin,
(6) (a1) is an MBS resin, and (b1) is an HIPS resin,
(7) (a1) is an ABS resin, and (b1) is an HIPS resin, and
(8) (a1) is an HIPS resin, and (b1) is an MBS resin.

In view of ease of preparing a material compound for a process of forming a film by extrusion and in view of superior rigidity and impact strength of a sheet to be obtained, (4) and (5) are particularly preferable.

In the present invention, a resin which improves affinity may be added to the thermoplastic resin component (a1) or the thermoplastic resin component (b1), or an adhesive layer which has affinity to both the (A) and (B) layers may intervene between these layers.

The conductive filler (b2) to be used as a constituent of the thermoplastic resin layer (B) together with the thermoplastic resin component (b1) is not particularly limited as long as it can improve the conductivity maintaining property of the sheet through a synergistic action with the conductive printing layer (C). Specific examples of the conductive filler (b2) are carbon black and a metallic conductive filler. Among these examples, carbon black, which is suitable for processing when it is mixed with a plastic and which imparts good conductivity to the mixture, is preferable. The type of carbon black is not particularly limited. Specific examples of the carbon black are acetylene black, furnace black, Ketjen Black, and channel black, among which acetylene black is preferable. Examples of the metallic conductive filler are one in which a core material such as TiO₂ is coated with SnO₂, and conductive zinc oxide.

The proportion of the conductive filler (b2) used, to the thermoplastic resin layer (B), is in the range of 2 to 20% by weight. That is, if the conductive filler (b2) is less than 2% by weight, the effect of improving the conductivity maintaining property is not exhibited, and the conductivity of a stretched portion cannot be maintained. On the other hand, if the conductive filler (b2) is more than 20% by weight, adhesion of the conductive printed layer is weakened, then the conductive printed layer becomes susceptible to damage by friction, and as a result the conductive filler tends to be released due to this friction. In particular, when carbon black, which has an excellent conductivity, is used in an amount of more than 20% by weight, the release of carbon black is marked, and is difficult to control. An amount of the conductive filler in the range of 5 to 15% by weight is particularly preferable since the balance of the above properties is good.

The thermoplastic resin layer (B) containing 2 to 20% by weight of a conductive filler according to the present invention is composed of a resin component (b3) which contains the above thermoplastic resin component (b1) and conductive filler (b2) as essential constituents.

In addition to the above thermoplastic resin component (b1) and conductive filler (b2), a rubber which contains a styrene as a constituent, such as a styrene-butadiene block copolymer or its hydrogenated product, may be preferably added to the resin component (b3). That is, although the use of the conductive filler (b2) results in degradation of extensibility of the thermoplastic resin layer (B), the additional use of the rubber which contains a styrene as a constituent in the present invention remarkably improves the extensibility of the sheet.

Among rubbers which contain a styrene as a constituent, a hydrogenated product of a styrene-butadiene block copolymer is preferable not only because it can improve extensibility, but because it can prevent heat degradation in the process of forming a sheet.

The amount of the rubber used which contains a styrene as a constituent is not particularly limited. However, an amount in the range of 5 to 20% by weight of the resin component (b3) is preferable in view of the effect of improving extensibility and maintaining rigidity. In addition, when the rubber which contains a styrene as a constituent is used, the total rubber content in the resin component (b3) is 10 to 30% by weight.

Furthermore, a conventional resin, a rubber other than those described above, and various additives (such as a lubricant, an antioxidant, and an inorganic filler) may be further added to such an extent that the necessary properties do not deteriorate.

This thermoplastic resin layer (B) has the following properties:
(1) It complements the loss of conductivity of the conductive coating due to stretching, and enhances the conductivity maintaining property, which would be unsatisfactory by only application of the conductive coating, to the same level as that of a carbon-mixed-in-type conductive sheet.
(2) It allows reduction of the conductive filler content in the thermoplastic resin layer (B), and exhibits good adhesion to the conductive coating.

Here, in order to improve the conductivity maintaining property as in (1), larger amounts of the conductive filler are more preferable, however, an increase in the amount of the conductive filler tends to result in weakening of adhesion as in (2). Accordingly, the present invention allows the thermoplastic resin layer (B) to have both of the above properties (1) and (2), which usually exclude each other, by setting the amount of the conductive filler (b2) in the thermoplastic resin layer (B) to 2 to 20% by weight.

The method for producing the resin component (b3) using the thermoplastic resin component (b1) and the conductive filler (b2) is not particularly limited. For example, the resin component (b3) may be obtained by kneading the thermoplastic resin component (b1) and the conductive filler (b2) using a Banbury mixer, a Ko-kneader, or a single- or double-screw extruder. The thermoplastic resin layer (B) can be produced by preparing a compound of the thermoplastic resin component (b1) and the conductive filler (b2) and then forming a film using the compound independently or with another resin, or the thermoplastic resin layer (B) can be produced by directly forming a film from the thermoplastic resin component (b1) and the conductive filler (b2) while kneading them.

In the case where the compound of the thermoplastic resin component (b1) and the conductive filler (b2) are prepared, it is preferable that a compound containing the conductive filler (b2) be prepared using an HIPS resin, and then the compound be mixed with an MBS resin or an ABS resin.

In general, the surface resistivity of a conductive sheet is preferably 10¹⁰ Ω or smaller in view of the antistatic effect. However, according to the present invention, even if the surface resistivity of the thermoplastic resin layer (B) is higher than 10¹⁰ Ω, the conductivity maintaining property of the sheet to the surface of which the conductive coating is applied is superior to that of a sheet in which a conductive coating is applied to a base sheet which does not contain a conductive filler.

The conductive sheet according to the present invention is a laminated sheet comprising a thermoplastic resin base layer (A), which has been described in detail, and a thermoplastic resin layer (B) containing 2 to 20% by weight of a conductive filler, laminated together, the surface of the thermoplastic resin layer (B) being provided with a conductive printed layer (C), The conductive layer (C) can be prepared by applying a conductive coating (c) to the surface of the thermoplastic resin layer (B).

Here, the conductive coating (c) is formed by adding a conductive filler and a binder resin, and additionally a dispersant and an additive, if necessary, to a dispersion medium. The conductive filler is not particularly limited as long as it can improve the conductivity maintaining property of the sheet through a synergistic action with the thermoplastic resin layer (B). Specific examples of the conductive filler are carbon black and a metallic conductive filler. Among these examples, carbon black, which imparts good conductivity to the conductive coating (c), is preferable. The type of carbon black is not particularly limited. Specific examples of the carbon black are acetylene black, furnace black, Ketjen Black, and channel black, among which acetylene black or Ketjen Black is preferable. Examples of the metallic conductive filler are one in which a core material such as TiO₂ is coated with SnO₂, and conductive zinc oxide.

The conductive filler content in the conductive coating (c) is not particularly limited as long as the printing layer which has a good appearance and the necessary conductivity can be obtained. However, since an insufficient conductive filler content results in an unsatisfactory conductivity, and an excessive conductive filler content results in degradation in dispersibility, ability to form a film, and the like, the conductive filler content is preferably in the range of 10 to 70% by weight of the conductive printed layer (C) which is dried and solidified. A preferable surface conductivity of the conductive printed layer (C) to which the conductive coating (c) is applied is 10¹⁰ Ω or smaller, and a more preferable surface conductivity is 10⁷ Ω or smaller. In the present invention, even if a protective printed layer (D) as described later is provided, the surface resistivity at the surface of the sheet is preferably 10¹⁰ Ω or smaller, and more preferably 10⁷ Ω or smaller.

The binder resin which is a constituent of the conductive coating (c) can be selected appropriately in view of the adhesion to the thermoplastic resin layer (B) and the like. Specific examples of the binder resin are a polyester resin, a polyamide resin, an acrylic ester resin, and polyurethane resin, and various copolymers of these resins. Only one of these resins or two or more mixed together may be used.

The dispersant may be added if necessary. Various dispersants such as a surfactant-type dispersant, which is generally used for dispersing a conductive filler or a pigment, can be employed. The dispersant may be selected appropriately in view of the types and the proportions of the conductive filler, the binder resin, and the dispersion medium.

The conductive coating (c) may be any of a solvent-base coating, a water-base coating, or an emulsion coating, however, a solvent-base coating is preferable in view of the performance of application to the surface of the thermoplastic resin layer (B). If the solvent-base coating is used, a preferable solvent is toluene, ethyl acetate, butyl acetate, methyl ethyl ketone (MEK), isopropanol, or the like.

In the conductive sheet according to the present invention which is composed of the thermoplastic resin base layer (A), the thermoplastic resin layer (B) containing 2 to 20% by weight of the conductive filler, and the conductive printed layer (C), as described above in detail, the arrangement of these layers has only to be such that the thermoplastic resin base layer (A) and the thermoplastic resin layer (B) are laminated together, and the surface of the thermoplastic resin layer (B) is provided with the conductive printed layer (C). It is preferable that the thermoplastic resin layer (B) containing 2 to 20% by weight of the conductive filler be laminated over each side of the thermoplastic resin base layer (A), and that the surface of the thermoplastic resin layer (B) be provided with the conductive printed layer (C) since such a conductive sheet is excellent in prevention of release of carbon and in conductivity maintaining property and in order that the properties of each side of the conductive sheet do not become different from the properties of the other side. The conductive printed layer (C) has only to be provided on one side of the laminated sheet composed of the thermoplastic resin base layer (A) and the thermoplastic resin layer (B). However, in view of the prevention of release of carbon, the conductivity maintaining property, and the elimination of side-specific properties, it is preferable that the conductive printed layer (C) be provided on both sides of the laminated sheet, that is, the arrangement of the layers be (C)/(B)/(A)/(B)/(C).

Another arrangement which consists of more layers, for example, (C)/(B)/(A)/(B)/(A)/(B)/(C), is also possible. An intermediate layer may be provided between the thermoplastic resin base layer (A) and the thermoplastic resin layer (B) in order to enhance the adhesion.

The ratio of the thickness of the thermoplastic resin layer (B) containing 2 to 20% by weight of the conductive filler to the thickness of the thermoplastic resin base layer (A) is not particularly limited, however, it is preferable that (the total thickness of layer (B))/(the total thickness of layer (A)) be in the range of 50/50 to 1/99, and it is particularly preferable in view of the strength of the sheet and the like that the thickness of the thermoplastic resin layer (B) containing 2 to 20% by weight of the conductive filler be in the range of 3 to 25% of the entire thickness of the sheet. In order that the properties of each side of the conductive sheet do not become different from the properties of the other side, it is preferable that the outmost layers (B) on both sides of the conductive sheet have the same thickness.

The absolute thicknesses of the layers are not particularly limited since it can be determined appropriately in accordance with the application of the conductive sheet, however, it is preferable that the total thickness of the thermoplastic resin base layer(s) (A) be 0.09 to 1.9 mm, the total thickness of the thermoplastic resin layer(s) (B) containing 2 to 20% by weight of the conductive filler be 0.01 to 0.4 mm, and the total thickness of the sheet in which the thermoplastic resin base layer(s) (A) and the thermoplastic resin layer(s) (B) are laminated be 0.1 to 2.0 mm since such thicknesses are suitable for processes for forming, such as vacuum forming, air pressure forming, and press forming.

The amount of the conductive printed layer (C) is not particularly limited, however, it is preferable in view of conductivity and productivity that the conductive printing layer (C) as a printed layer on the thermoplastic resin layer (B) be 0.1 to 50 g/m² based on the dry weight.

The conductive sheet according to the present invention may comprise a protective printed layer (D) which is formed by further applying a protective coating (d) to the conductive printed layer (C). The protective coating (d) is formed by adding a synthetic resin, and additionally an additive or the like, if necessary, to a dispersion medium. The synthetic resin to be used in the protective coating (d) can be selected appropriately in view of the adhesion to the conductive printed layer (C) and the like. Specific examples of the synthetic resin are a polyester resin, a polyamide resin, an acrylic ester resin, and polyurethane resin, and various copolymers of these resins. In general, a resin which is the same as the binder resin in the conductive coating (c) or a resin of the same kind or a mixture containing such a resin is preferably used in view of adhesion. Various additives may be added as necessary.

In the present invention, it is essential that the provision of the protective printed layer (D) should not degrade the conducting properties of the present invention, and more specifically, it is preferable that the conditions be adjusted appropriately so that the surface resistivity becomes 10¹⁰ Ω or smaller.

The process for producing such a conductive sheet is not particularly limited, however, it can be produced according to the production process of the present invention, that is, a process for producing a conductive sheet comprising the steps of preparing a laminated sheet in which a thermoplastic resin base layer (A) and a thermoplastic resin layer (B) containing 2 to 20% by weight of a conductive filler are laminated together and applying a conductive coating (c) to the thermoplastic resin layer (B).

Specifically, for example, a process can be employed in which a sheet corresponding to one of the thermoplastic resin base layer (A) and the thermoplastic resin layer (B) is formed by a sheet forming method in advance, then the other layer is formed on the sheet by lamination or the like, and then the conductive coating (c) is applied. However, a process in which
the thermoplastic resin component (a1) and
the resin component (b3) which contains the thermoplastic resin component (b1) with 2 to 20% by weight of the conductive filler (b2) are co-extruded to produce the laminated sheet having the thermoplastic resin base layer (A) composed of the thermoplastic resin component (a1) and the thermoplastic resin layer (B) composed of the resin component (b3), and then the conductive coating (c) is applied to the surface of the thermoplastic resin layer (B) in the laminated sheet
is particularly preferable since the laminated sheet obtains high interlayer strength, and the productivity can be remarkably improved.

A specific example of the latter process is a process in which the thermoplastic resin component (a1) (and other compounding components if necessary) and the resin component (b3) (and other compounding components if necessary) are separately melt-kneaded using an extruder, and then they are co-extruded using a T-die to form a sheet of the laminated sheet. As the lamination method, a conventional method such as the field block method and the multi-die method can be employed to produce the laminated sheet. The lip gap of the T-die is preferably set to the thickness of the desired sheet or slightly wider.

The temperature for forming the sheet may vary depending on the type of the resin to be used. In the case of styrene resin, for example, a temperature of 190 to 230°C is preferable.

The thickness of the laminated sheet obtained here is preferably 0.1 to 2.0 mm since such a thickness is suitable for the process for forming a film, such as vacuum forming, air pressure forming, and press forming, as described above.

To the surface of the thus-obtained laminated sheet, the conductive coating (c) is applied. The conductive coating (c) is applied more preferably to both sides of the laminated sheet than to one side, as described above.

According to the present invention, after the conductive printed layer (C) is formed by the application of the conductive coating (c), the protective coating (d) may be further applied to the conductive printed layer (C).

The method for applying the conductive coating (c), and the method for applying the protective coating (d), if necessary, may be a conventional method such as brush coating, spray coating, screen printing, and gravure roller printing, among which gravure roller printing is preferable.

The conductive printed layer (C) may be formed in a pattern. In such a case, a continuous pattern is preferable to avoid occurrence of partial potential difference. In the case where the protective printed layer (D) is applied to the surface of the conductive printed layer (C), the protective printed layer (D) may also be formed in various patterns.

The conductive coating (c) may be applied in an appropriate amount within a range such that the conductive coating (c) can exhibit conductivity, and an amount of about 0.1 to 50 g/m² is preferable in general. The protective coating (d) may be applied in an appropriate amount within the range such that the conductivity is not reduced, and an amount of about 0.1 to 20 g/m² is preferable in general.

The above described conductive sheet may be formed into a molded product of the present invention by a conventional forming method. Specific examples of the forming method are methods in which the sheet which is softened by heat is:
(1) molded by bringing it into close contact with a mold by vacuum (vacuum forming),
(2) molded by bringing it into close contact with a mold by compressed air (air pressure forming),
(3) molded using both vacuum and compressed air (air pressure-vacuum forming), or
(4) molded using mating molds (press forming).
However, the forming method is not limited to the above.

The molded article according to the present invention is useful as packaging of electronic parts such as a carrier tape and a tray.

### EXAMPLES

The present invention will be further described in detail in the following, however, the present invention should not be limited to these examples.

In the examples, properties were evaluated according to the following methods.

### 1. Surface Resistivity

The surface resistivity was measured in accordance with JIS K-6911 using Digital Ultra-High Resistance Meter R8340 and Resistivity Chamber R12702, both manufactured by Advantest Corporation, by applying a voltage of 10V for 1 minute with a measuring period of 1 minute. The surface resistivity of the sheet before stretching was evaluated in accordance with the following criteria.

### Evaluation Criteria for Surface Resistivity

ⓞ: Surface resistivity not greater than 10⁷ Ω
○: Surface resistivity greater than 10⁷ Ω but not greater than 10¹⁰ Ω
× : Surface resistivity greater than 10¹⁰ Ω

### 2. Conductivity Maintaining Property

The sheet was concurrently biaxially stretched using a device for biaxially stretching polymer films for research use, the BIX-702S, manufactured by Iwamoto Seisakusho, at a tank internal temperature of 120°C, a stretching speed of 10 mm/minute, and a stretched area multiplication factor of 2.6, and the surface resistivity of the sheet after stretching was evaluated in accordance with the following criteria

### Evaluation Criteria for Conductivity Maintaining Property

ⓞ: Surface resistivity smaller than 10⁸ Ω
○: Surface resistivity smaller than 10¹⁰ Ω but not smaller than 10⁸ Ω
× : Surface resistivity not smaller than 10¹⁰ Ω

### 3. Prevention of Release of Carbon

The sheet was rubbed for 200 times using a rubbing tester manufactured by Taihei Rika Kogyo, with which felt was used as a rubbing material. Tests were conducted under various loads. The weight of the lightest load under which apparent adhesion of carbon to the felt was observed after rubbing was evaluated in accordance with the following criteria.

### Evaluation Criteria for Prevention of Release of Carbon

ⓞ: Load of 1.5 kg
○: Load of 1.0 kg
× : Load of 0.5 kg

### 4. Layer Arrangement

The layer arrangement in the base sheet was viewed using a reflected-light illumination microscope.

### 5. Melt Flow Rate (MFR)

The melt flow rate was measured in accordance with JIS K-7210 at 200 °C under a load of 5 kgf.

Resins used in the following Examples and Comparative Examples are as follows:

### Resins Used as Thermoplastic Resin Components (a1) and (b1)

i) "CLEAPACT TI300", manufactured by Dainippon Ink and Chemicals, Inc., was used as the MBS resin. This is hereinafter referred to as "resin J-1".
ii) A resin (Mw = 210,000, rubber content = 8% by weight, MFR = 3) was used as the HIPS (high impact polystyrene). This is hereinafter referred to as "resin J-2".
iii) A commercially available product was used as the hydrogenated styrene-butadiene block copolymer (ratio of styrene/butadiene = 29/71 based on weight). This is hereinafter referred to as "resin J-3".

### <Preparation of Resin Component (b3) Containing Conductive Filler>

The resin component (3) containing the conductive filler was prepared by the following method.

### Reference Example 1

### (Preparation of Compound Containing Conductive Filler)

A mixture of HIPS resin J-2, hydrogenated styrene-butadiene block copolymer J-3, and carbon black in the ratio of 60/15/25 based on weight was kneaded using a Banbury mixer, and pelletized to produce a conductive thermoplastic resin composition. This is hereinafter referred to as "conductive composition B-1".

### Reference Example 2

The resins in the mixing ratio as shown in Table 1 were dry-blended, and mixtures containing 5%, 10%, and 15% by weight of carbon were prepared. These mixtures are hereinafter referred to as "mixture K-1", "mixture K-2", and "mixture K-3", respectively.

**Table 1**

| | | | Themoplastic resin component (b3) containing conductive filler | | |
|---|---|---|---|---|---|
| | | Unit | K-1 | K-2 | K-3 |
| Mixing ratio | Conductive resin B-1 | wt% | 20 | 40 | 60 |
| | Resin J-1 | wt% | 80 | 60 | 40 |
| Carbon content | | wt% | 5 | 10 | 15 |

### <Preparation of Conductive Coating (c) and Protective Coating (d)>

Conductive coating (c) and protective coating (d) were prepared by the following method.

### Reference Example 3

A coating consisting of 15% by weight of carbon black, 15% by weight of polyester resin, 34% by weight of toluene, 34% by weight of ethyl acetate, and 2% by weight of dispersant was used as the conductive coating.

### Reference Example 4

A coating consisting of 15% by weighs of acrylic resin, 35% by weight of toluene, 10% by weight of ethyl acetate, and 35% by weight of MEK was used as the protective coating.

### Examples 1 to 4 and Comparative Examples 1 to 5

Sheets having the resin components and the layer arrangements as shown in Tables 2 to 4 were formed by a coextrusion method using a sheet production device having extruders of 50 mm and 65 mm in diameters, a feed block, a T-die, and a take-off equipment. The extruder of 50 mm in diameter was used for the thermoplastic resin layer (B) containing carbon black, and the extruder of 65 mm in diameter was used for the thermoplastic resin layer (A). The temperatures at the end of the extruders of 50 mm and 65 mm were set at 225°C and 210°C, respectively. The extruded mixtures were laminated inside the feed block at 220°C, and a sheet with the thickness of 0.3 mm having two types of layers and three layers in total was formed through the T-die with the lip gap of 0.5 mm. The thus-obtained laminated sheet was composed of layers in a thickness ratio of 5/90/5. In addition, single-layered sheets were prepared in a similar manner except for using the extruder of 65 mm in diameter alone.

The conductive coating was applied to the base sheet obtained using a gravure printing machine in a manner such that the application amount would be 2 g/m² based on dry weight.

The protective coating was applied to the thus-obtained sheet, to the surface of which the conductive coating was applied, using a gravure printing machine in a manner such that the application amount would be 1 g/m² based on dry weight.

The thus-obtained conductive sheet was evaluated in accordance with the methods described above. The results are shown in Tables 2, 3, and 4.

**Table 2**

| | | Example | | | |
|---|---|---|---|---|---|
| | Unit | 1 | 2 | 3 | 4 |
| Layer arrangement in base sheet | - | 2 types | 2 types | 2 types | 2 types |
| | | 3 layers | 3 layers | 3 layers | 3 layers |
| Carbon-containing layer (B) | - | K-1 | K-2 | K-3 | K-2 |
| Thermoplastic resin layer (A) | - | J-1 | J-1 | J-1 | J-1 |
| Carbon content (layer (B)) | wt% | 5 | 10 | 15 | 10 |
| Application of conductive coating | - | Both sides | Both sides | Both sides | Both sides |
| Application of protective coating | - | Not used | Not used | Not used | Both sides |
| Surface resistivity (before stretching) | - | ⓞ | ⓞ | ⓞ | ⓞ |
| Conductivity maintaining property | - | ○ | ⓞ | ⓞ | ⓞ |
| Prevention of release of carbon | - | ○ | ○ | ○ | ⓞ |
| Overall evaluation | - | ○ | ○ | ○ | ⓞ |

**Table 3**

| | | Comparative Example | |
|---|---|---|---|
| | Unit | 1 | 2 |
| Layer arrangement in base sheet | - | 1 layer | 1 layer |
| Carbon content | wt% | 0 | 0 |
| Base sheet resin | - | J-1 | J-1 |
| Application of conductive coating | - | Both sides | Both sides |
| Application of protective coating | - | Not used Not used | Both sides |
| Surface resistivity (before stretching) | - | ⓞ | ⓞ |
| Conductivity maintaining property | - | × | × |
| Prevention of release of carbon | - | ○ | ⓞ |
| Overall evaluation | - | × | × |

**Table 4**

| | | Comparative Example | | |
|---|---|---|---|---|
| | Unit | 3 | 4 | 5 |
| Layer arrangement in base sheet | - | 2 types | 2 types | 2 types |
| | | 3 layers | 3 layers | 3 layers |
| Carbon-containing layer (B) | - | K-3 | B-1 | B-1 |
| Thermoplastic resin layer (A) | - | J-1 | J-1 | J-1 |
| Carbon content (layer (B) | wt% | 15 | 25 | 25 |
| Application of conductive coating | - | Not used | Not used | Both sides |
| Application of protective coating | - | Not used | Not used | Not used |
| Surface resistivity (before stretching) | - | ⓞ | ⓞ | ⓞ |
| Conductivity maintaining property | - | × | ○ | ⓞ |
| Prevention of release of carbon | - | × | × | × |
| Overall evaluation | - | × | × | × |

## Claims

1. A conductive sheet which is a laminated sheet comprising a thermoplastic resin base layer (A) and a thermoplastic resin layer (B) containing 2 to 20% by weight of a conductive filler, laminated together, the surface of the thermoplastic resin layer (B) being provided with a conductive printed layer (C) comprising a conductive filler and a binder resin.

2. A conductive sheet according to Claim 1, wherein the thermoplastic resin layer (B) is laminated over each side of the thermoplastic resin base layer (A) in the laminated sheet.

3. A conductive sheet according to Claim 1 or 2, wherein the amount of the conductive printed layer (C) is 0.1 to 50 g/m² based on the dry weight.

4. A conductive sheet according to Claim 3, wherein the conductive printed layer (C) has a surface resistivity of 10¹⁰ or smaller.

5. A conductive sheet according to Claim 3, wherein a protective printed layer (D) is further provided on the conductive printed layer (C), wherein the surface resistivity at the surface of the sheet is 10¹⁰ Ω or smaller.

6. A conductive sheet according to Claim 1 or 2, wherein the thermoplastic resin base layer (A) is formed from a thermoplastic resin component (a1) which is a styrene resin.

7. A conductive sheet according to Claim 1 or 2, wherein the thermoplastic resin layer (B) is formed from a thermoplastic resin component (b1) which is a styrene resin.

8. A process for producing a conductive sheet comprising the steps of:
preparing a laminated sheet in which a thermoplastic resin base layer (A) and a thermoplastic resin layer (B) containing 2 to 20% by weight of a conductive filler are laminated together and
applying a conductive coating (c) to the thermoplastic resin layer (B).

9. A process for producing a conductive sheet according to Claim 8, wherein, in the step of preparing the laminated sheet, a thermoplastic resin component (a1) and a resin component (b3) which contains a thermoplastic resin component (b1) with 2 to 20% by weight of a conductive filler (b2) are co-extruded to produce the laminated sheet having the thermoplastic resin base layer (A) composed of the thermoplastic resin component (a1) and the thermoplastic resin layer (B) composed of the resin component (b3).

10. A process for producing a conductive sheet according to Claim 9, wherein the thermoplastic resin component (a1) and the resin component (b3) are co-extruded to form a layered structure of (b3)/(a1)/(b3).

11. A process for producing a conductive sheet according to Claim 8, 9, or 10, wherein the thermoplastic resin component (a1) is a styrene resin.

12. A process for producing a conductive sheet according to Claim 8, 9, or 10, wherein the thermoplastic resin component (b1) is a styrene resin.

13. A process for producing a conductive sheet according to Claim 8, 9, or 10, wherein the amount of the conductive coating (c) applied to the thermoplastic resin layer (B) is 0.1 to 50 g/m² based on the dry weight.

14. A process for producing a conductive sheet according to Claim 13, further comprising the step of applying a protective coating (d) to the surface of the conductive coating (c).

15. A molded article obtained by heat-molding a conductive sheet as recited in one of Claims 1 to 7.

## Patentansprüche

1. Leitende Folie, die eine laminierte Folie ist, umfassend eine thermoplastische Harzgrundschicht (A) und eine thermoplastische Harzschicht (B), enthaltend 2 bis 20 Gew.-% eines leitenden Füllstoffs, die zusammen laminiert sind, wobei die Oberfläche der thermoplastischen Harzschicht (B) mit einer leitenden gedruckten Schicht (C) versehen ist, die einen leitenden Füllstoff und ein Bindemittelharz umfasst.

2. Leitende Folie nach Anspruch 1, wobei die thermoplastische Harzschicht (B) über jede Seite der thermoplastischen Harzgrundschicht (A) in der laminierten Folie laminiert ist.

3. Leitende Folie nach Anspruch 1 oder 2, wobei die Menge der leitenden gedruckten Schicht (C) 0,1 bis 50 g/m², bezogen auf das Trockengewicht, beträgt.

4. Leitende Folie nach Anspruch 3, wobei die leitende gedruckte Schicht (C) einen spezifischen Oberflächenwiderstand von 10¹⁰ Ω oder weniger besitzt.

5. Leitende Folie nach Anspruch 3, wobei des Weiteren eine schützende gedruckte Schicht (D) auf der leitenden gedruckten Schicht (C) angebracht ist, wobei der spezifische Oberflächenwiderstand an der Oberfläche der Folie 10¹⁰ Ω oder weniger beträgt.

6. Leitende Folie nach Anspruch 1 oder 2, wobei die thermoplastische Harzgrundschicht (A) aus einer thermoplastischen Harzkomponente (a1) gebildet ist, die ein Styrolharz ist.

7. Leitende Folie nach Anspruch 1 oder 2, wobei die thermoplastische Harzschicht (B) aus einer thermoplastischen Harzkomponente (b1) gebildet ist, die ein Styrolharz ist.

8. Verfahren zur Herstellung einer leitenden Folie, umfassend die Stufen:
Herstellen einer laminierten Folie, bei der eine thermoplastische Harzgrundschicht (A) und eine thermoplastische Harzschicht (B), enthaltend 2 bis 20 Gew.-% eines leitenden Füllstoffs, zusammen laminiert sind, und
Aufbringen einer leitenden Beschichtung (c) auf die thermoplastische Harzschicht (B).

9. Verfahren zur Herstellung einer leitenden Folie nach Anspruch 8, wobei in der Stufe des Herstellens der laminierten Folie eine thermoplastische Harzkomponente (a1) und eine Harzkomponente (b3), die eine thermoplastische Harzkomponente (b1) mit 2 bis 20 Gew.-% eines leitenden Füllstoffs (b2) enthält, co-extrudiert werden um die laminierte Folie mit der thermoplastischen Harzgrundschicht (A), bestehend aus der thermoplastischen Harzkomponente (a1), und der thermoplastischen Harzschicht (B), bestehend aus der Harzkomponente (b3), herzustellen.

10. Verfahren zur Herstellung einer leitenden Folie nach Anspruch 9, wobei die thermoplastische Harzkomponente (a1) und die Harzkomponente (b3) co-extrudiert werden um eine Schichtstruktur (b3)/(al)/(b3) zu bilden.

11. Verfahren zur Herstellung einer leitenden Folie nach Anspruch 8, 9 oder 10, wobei die thermoplastische Harzkomponente (a1) ein Styrolharz ist.

12. Verfahren zur Herstellung einer leitenden Folie nach Anspruch 8, 9 oder 10, wobei die thermoplastische Harzkomponente (b1) ein Styrolharz ist.

13. Verfahren zur Herstellung einer leitenden Folie nach Anspruch 8, 9 oder 10, wobei die Menge der leitenden Beschichtung (c), die auf die thermoplastische Harzschicht (B) aufgebracht wird, 0,1 bis 50 g/m², bezogen auf das Trockengewicht, beträgt.

14. Verfahren zur Herstellung einer leitenden Folie nach Anspruch 13, des Weiteren umfassend die Stufe des Aufbringens einer schützenden Beschichtung (d) auf die Oberfläche der leitenden Beschichtung (c).

15. Geformter Gegenstand, erhalten durch Heißformen einer leitenden Folie nach einem der Ansprüche 1 bis 7.

## Revendications

1. Feuille conductrice qui est une feuille laminée comprenant une couche de base de résine thermoplastique (A) et une couche de résine thermoplastique (B) contenant 2 à 20 % en poids d'une charge conductrice, laminées conjointement, la surface de la couche de résine thermoplastique (B) étant pourvue d'une couche conductrice imprimée (C) comprenant une charge conductrice et une résine liante.

2. Feuille conductrice selon la revendication 1, dans laquelle la couche de résine thermoplastique (B) est laminée sur chaque côté de la couche de base de résine thermoplastique (A) dans la feuille laminée.

3. Feuille conductrice selon la revendication 1 ou 2, dans laquelle la quantité de la couche conductrice imprimée (C) est de 0,1 à 50 g/m² sur la base du poids sec.

4. Feuille conductrice selon la revendication 3, dans laquelle la couche conductrice imprimée (C) a une résistivité superficielle égale ou inférieure à 10¹⁰ Ω.

5. Feuille conductrice selon la revendication 3, dans laquelle une couche protectrice imprimée (D) est en outre fournie sur la couche conductrice imprimée (C), dans laquelle la résistivité superficielle à la surface de la feuille est égale ou inférieure à 10¹⁰ Ω.

6. Feuille conductrice selon la revendication 1 ou 2, dans laquelle la couche de base de résine thermoplastique (A) est formée à partir d'un composant de résine thermoplastique (a1) qui est une résine styrénique

7. Feuille conductrice selon la revendication 1 ou 2, dans laquelle la couche de résine thermoplastique (B) est formée à partir d'un composant de résine thermoplastique (b1) qui est une résine styrénique.

8. Procédé de production d'une feuille conductrice comprenant les étapes consistant à :
préparer une feuille laminée dans laquelle une couche de base de résine thermoplastique (A) et une couche de résine thermoplastique (B) contenant 2 à 20 % en poids d'une charge conductrice sont laminées ensemble, et
appliquer un revêtement conducteur (c) sur la couche de résine thermoplastique (B).

9. Procédé de production d'une feuille conductrice selon la revendication 8, dans lequel, dans l'étape de préparation de la feuille laminée, on coextrude un composant de résine thermoplastique (a1) et un composant de résine (b3), qui contient un composant de résine thermoplastique (b1) avec 2 à 20 % en poids d'une charge conductrice (b2), pour produire la feuille laminée ayant la couche de base de résine thermoplastique (A) composée du composant de résine thermoplastique (a1) et la couche de résine thermoplastique (B) composée du composant de résine (b3).

10. Procédé de production d'une feuille conductrice selon la revendication 9, dans lequel le composant de résine thermoplastique (a1) et le composant de résine (b3) sont coextrudés pour former une structure stratifiée (b3)/(a1)/(b3).

11. Procédé de production d'une feuille conductrice selon la revendication 8, 9 ou 10, dans lequel le composant de résine thermoplastique (a1) est une résine styrénique.

12. Procédé de production d'une feuille conductrice selon la revendication 8, 9 ou 10, dans lequel le composant de résine thermoplastique (b1) est une résine styrénique.

13. Procédé de production d'une feuille conductrice selon la revendication 8, 9 ou 10, dans lequel la quantité du revêtement conducteur (c) appliquée à la couche de résine thermoplastique (B) est de 0,1 à 50 g/m² sur la base du poids sec.

14. Procédé de production d'une feuille conductrice selon la revendication 13, comprenant en outre l'étape d'application d'un revêtement protecteur (d) à la surface du revêtement conducteur (c).

15. Article moulé obtenu par moulage à chaud d'une feuille conductrice telle que décrite dans l'une des revendications 1 à 7.
